# EUROPÄISCHE PATENTSCHRIFT

(11) **EP 1 166 956 B1**
(45) Veröffentlichungstag und Bekanntmachung des Hinweises auf die Patenterteilung: **23.03.2005**
(21) Anmeldenummer: 01115224.6
(22) Anmeldetag: 22.06.2001
(51) Int. Cl.: B23Q 3/06, B23Q 1/25, B23Q 7/04, B25B 5/00

(54) **Spanneinrichtung für Werkstücke, wie Fenster- oder Türprofile oder sonstige langgestreckte Profile**
Clamping device for work pieces, such as window or door profiles or other elongated profiles
Dispositif de serrage pour pièces de travail, par exemple profilés pour fenêtres ou portes ou autres profilés allongés

(30) Priorität: 23.06.2000 DE 10030865
(43) Veröffentlichungstag der Anmeldung: 02.01.2002
(73) Patentinhaber: Eisenbach, Bernhard, D-65611 Brechen (DE)
(72) Erfinder: Eisenbach, Bernhard, D-65611 Brechen (DE)
(74) Vertreter: Müller, Eckhard, Dr.

(56) Entgegenhaltungen:
- EP-A- 0 562 216
- DE-U- 29 522 092
- FR-A- 2 689 807
- FR-A- 2 770 433
- SU-A- 973 353

## Beschreibung

Die Erfindung betrifft eine Spanneinrichtung für Werkstücke entsprechend dem Oberbegriff des Anspruchs 1, wie z.B. aus der EP-A-0 562 216 bekannt.

Eine weitere Spanneinrichtung ist beispielsweise aus der EP 0 934 800 A1 bekannt. Zur Aufnahme eines stabförmigen Hohlprofils sind dort vier Spannelemente vorgesehen, welche unabhängig voneinander an einer Fräsbank beziehungsweise einem Maschinengestellt angeordneten Schiene in Längsrichtung verschiebbar sind. Weiterhin weist diese Spanneinrichtung wenigstens eine verfahrbare Bearbeitungseinheit zum Bearbeiten der einzelnen Seitenwände des Hohlprofiles auf. Die Bearbeitungseinheit kann dabei entweder mittels Handhebel oder mittels einer CNC-Steuerung verfahren werden.

Aus der DE 296 01 808 U1 ist eine Vorrichtung zum Bearbeitung von Stangenmaterial bekannt, die eine dreiachsig verfahrbare Bearbeitungseinheit in Kombination mit einer Profilspannvorrichtung auf. Die Profilspannvorrichtung weist mehrere längs einer Welle bewegbare Aufspannschlitten auf. Der oder die Aufspannschlitten stützen sich über ein Linearlager auf der Welle ab, so daß die Aufspannschlitten händisch oder pneumatisch verschoben werden und auf der Welle in beliebiger Position fixiert werden.

Weiterhin ist in der EP 0 710 524 A1 eine Spanneinrichtung für Werkstücke mit mehreren Spannelementen zum Einspannen des Werkstücks an mehreren, voneinander beabstandeten Positionen entlang der Längserstreckung des Werkstücks beschrieben, wobei jedes der Spannelemente mittels jeweils einer zugeordneten Verfahreinrichtung unabhängig von den anderen Spannelementen von einer ersten Einspannposition in wenigstens eine zweite Einspannposition verfahrbar ist, in Kombination mit einer verfahrbaren, der Spanneinrichtung zugeordneten Bearbeitungseinheit zum Bearbeiten der Werkstücke über eine Bearbeitungslänge.

Obwohl sich diese, mit dem Bearbeitungswerkzeug verfahrbaren Spannvorrichtungen in der Praxis recht gut bewährt haben, besteht das Problem, daß diese Spannvorrichtungen bei bestimmten Bearbeitungsschritten des Werkstückes zusätzlich verschoben werden müssen, was zu entsprechend verlängerten Taktzeiten führt. Im übrigen besteht gelegentlich das Bedürfnis, das Werkstück an mehreren Einspannpositionen einzuspannen, so daß Vibrationen oder dergleichen während der Bearbeitung des Werkstückes vermieden werden und das Werkstück exakt in der Bearbeitungs-Sollage positioniert ist.

Der Erfindung liegt demgegenüber die Aufgabe zugrunde, eine Spanneinrichtung mit den eingangs genannten Merkmalen dahingehend weiterzubilden, daß eine Verkürzung der Taktzeit der einzelnen Bearbeitungsschritte erreicht und das Werkstück sicher und dauerhaft in der Bearbeitungs-Sollage fixiert ist.

Diese Aufgabe wird bei der Spanneinrichtung mit den Merkmalen des Anspruchs 1 gelöst.

Der Vorteil der erfindungsgemäßen Spanneinrichtung besteht im wesentlich darin, daß eine Taktzeitverkürzung der Bearbeitungsschritte durch unabhängiges Verfahren der Verspannelemente sowie der Bearbeitungseinheit ermöglicht ist. Des weiteren wird auch die Position des Werkstückes durch die Anordnung einer Mehrzahl von quasi festen Spannelementen während der Bearbeitung sicher festgelegt. Die Spanneinrichtung erweist sich auch insoweit als vorteilhaft, als ein nur geringer baulicher beziehungsweise konstruktiver Aufwand erforderlich ist, da die Spannelemente wie auch die zugehörigen Verfahreinrichtungen standardisiert und im wesentlichen gleich ausgebildet sind. Schließlich sind auch einfachere Kollisionsbetrachtungen durchzuführen, um auszuschließen, daß die Bearbeitungseinheit das Werkzeug an einer solchen Position bearbeitet, an der gerade ein Spannelement sich in einer Einspannposition befindet. So kann beispielsweise ein ca. 2,5 m langes Werkstück, wie Fenster- oder Türprofil, mittels sechs im wesentlichen äquidistant entlang der Längserstreckung des Werkstücks angeordneten Spannelementen eingespannt werden, wobei dann eine Bearbeitungseinheit die an dem Werkstück durchzuführenden Bearbeitungsschritte, wie Fräsen, Bohren, Schweißraupenentfernung oder dergleichen durchführt. Kommt das Bearbeitungswerkzeug der Bearbeitungseinheit an eine Bearbeitungsstelle des Werkstücks, die sich im Bereich einer ersten Einspannposition eines Spannelements befindet, so wird dieses Spannelement von der ersten Einspannposition in eine zweite Einspannposition mittels der Verfahreinrichtung verfahren, so daß die Bearbeitung des Werkstücks an der Bearbeitungsposition ohne Vorhandensein einen störenden Spannelements durchgeführt werden kann. Dadurch, daß wenigstens eines, vorzugsweise jedes der Spannelemente mittels einer zugeordneten Verfahrposition unabhängig von den anderen Spannelementen individuell verfahrbar ist, sind sehr große Freiheitsgrade in der Bearbeitung des Werkstückes mittels der Bearbeitungseinheit möglich.

Nach einer ersten vorteilhaften Weiterbildung der Erfindung sind die Spannelemente in einer Längsreihe aufeinanderfolgend auf einem Werkzeugtisch, insbesondere an einer gemeinsamen Führung, angeordnet. Durch diese Maßnahme läßt sich eine exakte Positionierung der Spanneinrichtungen durchführen, wobei aufgrund der Mehrzahl der vorhandenen Spannelemente eine definierte Positionierung des Werkstücks über die gesamte Längserstreckung möglich ist.

Bevorzugt sind die Einspannpositionen entlang der Längserstreckung des Werkstücks in einem Abstand von ca. 0,3 m bis ca. 0,7 m, bevorzugt ca. 0,5 m angeordnet. Diese Maßnahme erweist sich insbesondere bei Werkstücken, die eine Längserstreckung von ca. 1,5 bis 3,0 m besitzen, als vorteilhaft, da zum einen aufgrund der Vielzahl der Spannelemente eine sichere Fixierung über die Längserstreckung des Werkstücks ermöglicht und zum anderen auch die Schwingungsneigung des Werkstücks während der Bearbeitung durch die Bearbeitungseinheit erheblich reduziert ist.

Nach einer anderen vorteilhaften Ausgestaltung der Erfindung weist die Verfahreinrichtung pneumatische oder elektrisch betätigte Stellmittel, wie eine pneumatische Zylinder-Kolben-Vorrichtung, einen elektrischen Schrittmotor oder dergleichen auf, wobei das Spannelement mit dem Stellmittel gekoppelt ist. Durch diese Maßnahme ist ein äußerst schnelles Verfahren der jeweiligen Spannelemente gewährleistet.

Weiterhin hat es sich als äußerst vorteilhaft erwiesen, daß die Stellmittel individuell mittels einer NC-Steuerung aktiviert werden. Der NC-Steuerung werden beispielsweise die Parameter Einspannposition der Spannelemente, die Bearbeitungsposition der Bearbeitungseinheit, die Bearbeitungslänge eines bestimmten Bearbeitungsschritts der Bearbeitungseinheit oder dergleichen zugeführt. Aus diesen Werten ermittelt die NC-Steuerung individuell für jedes Spannelement die jeweiligen Verfahrwege von der ersten Einspannposition in die zweite Einspannposition, die von den Stellmitteln ausgeführt werden.

Die Spanneinrichtung läßt sich konstruktiv einfach herstellen, indem die mehreren Spannelemente und/oder die mehreren Verfahreinrichtungen im wesentlichen als gleiche Bauteile ausgebildet sind. Hierdurch läßt sich nicht nur der konstruktive Aufwand verringern, auch der Aufwand der Datenverarbeitung für die NC-Steuerung ist insoweit minimiert.

Vorteilhafterweise sind die Bearbeitungseinheit und die Spannelemente unabhängig voneinander verfahrbar. Dabei kann die Bearbeitungseinheit auch als Multifunktionseinheit ausgebildet sein, die beispielsweise einen Fräskopf, einen Bohrkopf oder dergleichen Bearbeitungswerkzeug aufweist. Fährt nun die Bearbeitungseinheit entlang der Längserstreckung des Werkstückes, um dieses an unterschiedlichen Bearbeitungspositionen und/oder in unterschiedlichen Bearbeitungsschritten zu bearbeiten, so wird das wenigstens eine beziehungsweise werden die einzelnen Spannelemente mittels der zugeordneten Verfahreinrichtung, beispielsweise abhängig von der Bearbeitungsposition der Bearbeitungseinheit, der Bearbeitungslänge eines Bearbeitungsschritts oder dergleichen, von einer ersten Einspannposition in wenigstens eine zweite Einspannposition verfahren. Dabei kann beispielsweise das zweite Einspannelement von der ersten Einspannposition einige Zentimeter oder um eine sonstige Wegstrecke nach links verfahren werden, während das nächste Spannelement von der ersten Einspannposition um einige Zentimeter oder eine sonstige Wegstrecke nach rechts in die zweite Einspannposition verfahrbar ist. Dies hat vorteilhafterweise wiederum eine Reduzierung der Taktbeziehungsweise Bearbeitungszeiten zur Folge.

Von besonderem Vorteil ist die Bearbeitungslänge eines Bearbeitungsschritts beispielsweise der Fräsweg oder ein Sägeschnitt des Werkstücks und der Verfahrweg der Spannelemente Werte von etwa dem 1- bis 3-fachen, bevorzugt etwa dem 2-fachen der jeweiligen Bearbeitungslänge des Werkstücks annimmt. Hierdurch ist in jedem Fall dafür Sorge getragen, daß die Bearbeitung des Werkstücks durch die Bearbeitungseinheit ungestört durchgeführt werden kann, da die im Bereich der jeweiligen Bearbeitungsposition befindlichen Spannelemente vor dem Beginn des jeweiligen Bearbeitungsschrittes ausreichend weit von der Bearbeitungsposition weg verfahren werden, und zwar um einen solchen Verfahrweg, daß die Bearbeitungseinheit das Werkzeug über die vorgesehene Bearbeitungslänge frei bearbeiten kann. Hierdurch werden mögliche Kollisionen zwischen Bearbeitungseinheit und Spannelement wirkungsvoll vermieden.

Von besonderem Vorteil wird nach einer Ausgestaltung der Erfindung die jeweilige Verfahreinrichtung beziehungsweise das jeweilige Stellmittel der Spannelemente in Abhängigkeit der aktuellen Position der Bearbeitungseinheit aktiviert.

Weiterhin ist auch vorgesehen, daß die NC-Steuerung die Verfahreinrichtung beziehungsweise die Stellmittel in Abhängigkeit eines bevorzugt abgespeicherten Kollisionsfensters individuell aktiviert.

Von Vorteil besteht nach einer weiteren Ausgestaltung der Erfindung auch die Möglichkeit, daß die Verfahreinrichtung beziehungsweise die Stellmittel während des Verfahrens der Bearbeitungseinrichtung von einer ersten Bearbeitungsposition in wenigstens eine zweite Bearbeitungsposition aktiviert werden. Hierdurch ist dafür Sorge getragen, daß dann, wenn das Bearbeitungswerkzeug den jeweiligen Bearbeitungsschritt des Werkstücks durchführt, die Spannelemente für eine sichere Einspannung des Werkstücks sorgen. Nach Beendigung des jeweiligen Bearbeitungsschritts wird dann das nächste oder werden dann die nächsten Spannelemente von einer ersten Einspannposition in eine zweite Einspannposition verfahren, so daß dann der nächste Bearbeitungsschritt des Werkstückes mittels der Bearbeitungseinheit folgen kann.

Vorteilhaft ist es dabei, daß die Verfahreinrichtung beziehungsweise die Stellmittel für die Spannelemente während der einzelnen Bearbeitungsschritte der Bearbeitungseinrichtung deaktiviert sind. Dies bedeutet, daß dann, wenn die Bearbeitungseinrichtung einen Bearbeitungsschritt am Werkzeug durchführt, die Spannelemente für eine feste Einspannung des Werkstücks sorgen, da sie während der Bearbeitung des Werkstückes in einem Bearbeitungsschritt nicht verfahren werden.

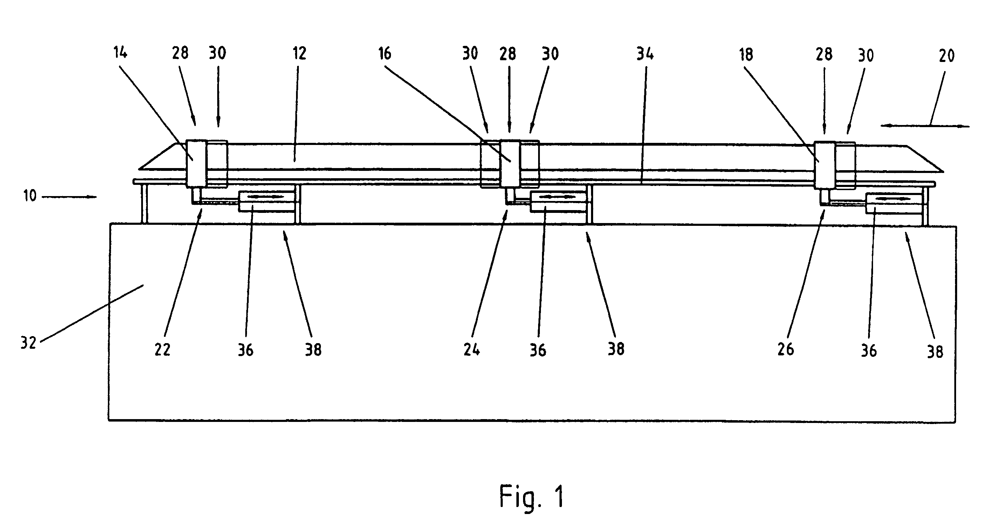

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Die einzige Figur zeigt in schematischer Darstellung ein Ausführungsbeispiel einer erfindungsgemäßen Spanneinrichtung in Seitenansicht.

Die in der Figur dargestellte Spanneinrichtung 10 für Werkstücke, wie Fenster- oder Türprofile oder sonstige langgestreckte Profile, weist mehrere Spannelemente 14, 16, 18 zum Einspannen eines Werkstücks 12 an mehreren voneinander beabstandeten Positionen entlang der Längserstreckung 20 des Werkstücks 12 auf. Jedes der Spannelemente 14, 16, 18 ist bei dem hier gewählten Ausführungsbeispiel mittels jeweils einer zugeordneten Verfahreinrichtung 22, 24, 26 unabhängig von den anderen Spannelementen 14, 16, 18 von einer ersten Einspannposition 28 in eine zweite Einspannposition 30 verfahrbar. Die Spannelemente 14, 16, 18 sind in einer Längsreihe aufeinanderfolgend auf beispielsweise einem Werkzeugtisch 32, insbesondere an einer gemeinsamen Führung 34 angeordnet. Die Einspannpositionen 28, 30 entlang der Längsachse des Werkstücks 12 sind bei dem hier gewählten Ausführungsbeispiel in einem Abstand von ca. 0,3 m bis ca. 0,7 m, bevorzugt ca. 0,5 m angeordnet.

Die Verfahreinrichtungen können jede beliebige konstruktive Ausgestaltung aufweisen, sind jedoch bevorzugt als pneumatisch oder elektrisch betätigbare Stellmittel 38 ausgebildet, wie beispielsweise eine pneumatische Zylinder-Kolben-Vorrichtung oder auch ein elektrischer Schritt- oder Linearmotor.

Die Spannelemente 14, 18 sind mit dem jeweiligen, zugeordneten Stellmittel 38 gekoppelt. Die Verfahreinrichtungen 22, 24, 26 beziehungsweise die Stellmittel 38 werden individuell mittels einer NC-Steuerung aktiviert. Bevorzugt sind die mehreren Spannelemente 14, 16, 18 und/oder die mehreren Verfahreinrichtungen 22, 24, 26 als im wesentlichen gleiche Bauteile ausgebildet.

Der Spanneinrichtung 10 ist eine Bearbeitungseinheit zugeordnet, die beispielsweise auf einem Werkzeugtisch 32 mittels eines Supports verfahrbar ist. Die Bearbeitungseinheit kann Fräsmaschinen, Bohrmaschinen, Sägevorrichtungen oder dergleichen - auch als Mehrfachwerkzeuge - aufweisen. Dabei sind die Bearbeitungseinheit und die Spannelemente 14, 16, 18 jeweils unabhängig voneinander entlang dem Werkstück 12 verfahrbar.

Der Verfahrweg der Spannelemente 14, 16, 18 zwischen der ersten Einspannposition 28 und der zweiten Einspannposition 30 ist abhängig von der jeweiligen Bearbeitungslänge des Werkstücks 12 während eines Bearbeitungsschritts, so zum Beispiel abhängig von dem Fräsweg, der Schnittlänge eines Sägeschnitts oder dergleichen. Bevorzugt nimmt der Verfahrweg der Spannelemente 14, 16, 18 Werte von etwa dem 1- bis 3-fachen, bevorzugt dem 2-fachen der jeweiligen Bearbeitungslänge des Werkstücks 12 an. Die jeweilige Verfahreinrichtung 22, 24, 26 beziehungsweise das jeweilige Stellmittel für die Spannelemente 14, 16, 18 wird unter anderem beispielsweise in Abhängigkeit der aktuellen Bearbeitungsposition der Bearbeitungseinheit bezüglich des Werkstückes 12 aktiviert.

Weiterhin ist vorgesehen, daß die NC-Steuerung die Verfahreinrichtung 22, 24, 26 beziehungsweise die Stellmittel 38 in Abhängigkeit eines Kollisionsfensters, welches bevorzugt innerhalb der NC-Steuerung abgespeichert ist, individuell aktiviert. Dabei bietet es sich ebenfalls an, daß die Verfahreinrichtung 22, 24, 26 beziehungsweise die Stellmittel 38 während des Verfahrens der Bearbeitungseinrichtung von einer ersten Bearbeitungsposition zu einer zweiten Bearbeitungsposition aktiviert werden.

Weiterhin erweist es sich als vorteilhaft, daß die Verfahreinrichtung 22, 24, 26 beziehungsweise die Stellmittel 38 während der einzelnen Bearbeitungsschritte der Bearbeitungseinrichtung deaktiviert sind. In manchen Anwendungsfällen kann es sich aber auch als vorteilhaft erweisen, daß beispielsweise fernab von der jeweiligen Bearbeitungsposition der Bearbeitungseinheit angeordnete Spannelemente 14, 16, 18 auch während der Bearbeitungsdauer eines Bearbeitungsschrittes der Bearbeitungseinheit verfahren werden können.

Insgesamt erweist sich die erfindungsgemäße Spanneinrichtung insoweit als vorteilhaft, als die Taktzeiten bei der Bearbeitung des Werkstückes erheblich verkürzt werden können, da die individuellen Verfahrschritte der einzelnen Spannelemente 14, 16, 18 unabhängig von dem Verfahren der Bearbeitungseinheit an die jeweilige Bearbeitungsposition des Werkstücks 12 erfolgen und die individuellen Verfahrwege der Spannelemente 14, 16, 18 den jeweiligen Bearbeitungslängen eines Bearbeitungsschrittes des Werkzeuges 12 angepaßt werden können. Insoweit ist die Gefahr einer Kollision des Bearbeitungswerkzeuges mit einer der Spannelemente 14, 16, 18 ausgeschlossen, da die im Bereich einer zukünftigen Bearbeitungsposition befindlichen Spannelemente 14, 16, 18 aus der jeweiligen ersten Einspannposition 28 in eine zweite individuelle Einspannposition 30 verfahren werden, so daß dann die Bearbeitung des Werkstücks 12 an der Bearbeitungsposition erfolgen kann, die der ersten Einspannposition 28 des jeweiligen Spannelements 14, 16, 18 entspricht.

### Bezugszeichenliste

- 10: Spanneinrichtung
- 12: Werkstück
- 14: Spannelement
- 16: Spannelement
- 18: Spannelement
- 20: Längserstreckung
- 22: Verfahreinrichtung
- 24: Verfahreinrichtung
- 26: Verfahreinrichtung
- 28: 1. Einspannposition
- 30: 2. Einspannposition
- 32: Werkzeugtisch
- 34: Führung
- 36: pneumatische Zylinder-Kolben-Vorrichtung
- 38: Stellmittel

## Patentansprüche

1. Spanneinrichtung (10) für Werkstücke (12), wie Fenster- oder Türprofile oder sonstige langgestreckte Profile, mit mehreren Spannelementen (14, 16, 18) zum Einspannen des Werkstücks (12) an mehreren, voneinander beabstandeten Positionen entlang der Längserstreckung (20) des Werkstücks (12), wobei jedes der Spannelemente (14, 16, 18) mittels jeweils einer zugeordneten und mittels einer NC-Steuererung aktivierbaren Verfahreinrichtung (22, 24, 26) unabhängig von den anderen Spannelementen (14, 16, 18) von einer ersten Einspannposition (28) in wenigstens eine zweite Einspannposition (30) entlang der Längserstreckung des Werkstückes (12) verfahrbar ist, in Kombination mit einer verfahrbaren, der Spanneinrichtung (10) zugeordneten Bearbeitungseinheit zum Bearbeiten der Werkstücke (12) über eine Bearbeitungslänge, **dadurch gekennzeichnet, daß** die NC-Steuerung depart ausgebildet ist, daß sie den Verfahrweg der Spannelemente (14, 16, 18) zwischen der ersten Einspannposition (28) und der zweiten Einspannposition (30) in Abhängigkeit von der Bearbeitungslänge des jeweiligen Bearbeitungsschritts des Werkstücks (12) ermittelt.

2. Spanneinrichtung nach Anspruch 1, **dadurch gekennzeichnet, daß** die Spannelemente (14, 16, 18) in einer Längsreihe aufeinanderfolgend auf einem Werkzeugtisch (32) oder dergleichen, insbesondere an einer gemeinsamen Führung (34), verfahrbar angeordnet sind.

3. Spanneinrichtung nach einem der vorhergehenden Ansprüche, **dadurch gekennzeichnet, daß** die erste und/oder zweite Einspannposition (28, 30) entlang der Längserstreckung (20) des Werkstücks (12) in einem Abstand von ca. 0,3 m bis ca. 0,7 m, bevorzugt ca. 0,5 m angeordnet sind.

4. Spanneinrichtung nach einem der vorhergehenden Ansprüche, **dadurch gekennzeichnet, daß** die Verfahreinrichtung (22, 24, 26) pneumatisch oder elektrisch betätigte Stellmittel (38), wie eine pneumatische Zylinder-Kolben-Vorrichtung (36) oder einen elektrischen Schritt- oder Linearmotor aufweist, und das Spannelement (14, 16, 18) mit dem Stellmittel (38) gekoppelt ist.

5. Spanneinrichtung nach Anspruch 4, **dadurch gekennzeichnet, daß** die Stellmittel (38) individuell mittels einer NC-Steuerung aktiviert werden.

6. Spanneinrichtung nach einem der vorhergehenden Ansprüche, **dadurch gekennzeichnet, daß** die mehreren Spannelemente(14, 16, 18) und/oder mehreren Verfahreinrichtungen (22, 24, 26) im wesentlichen als gleiche Bauteile ausgebildet sind.

7. Spanneinrichtung nach einem der vorhergehenden Ansprüche, **dadurch gekennzeichnet, daß** die Bearbeitungseinheit auf einem Werkzeugtisch (32) beispielsweise mittels eines Supports verfahrbar und insbesondere als Fräs-, Bohr- oder Sägevorrichtung ausgebildet ist, wobei die Bearbeitungseinheit und die Spannelemente (14, 16, 18) unabhängig voneinander verfahrbar sind.

8. Spanneinrichtung nach einem der vorhergehenden Ansprüche, **dadurch gekennzeichnet, daß** die Bearbeitungslänge eines Bearbeitungsschritts beispielsweise der Fräsweg oder ein Sägeschnitt des Werkstücks (12) ist, und der Verfahrweg der Spannelemente (14, 16, 18) Werte von etwa dem 1- bis 3-fachen, bevorzugt dem 2-fachen der jeweiligen Bearbeitungslänge annimmt.

9. Spannvorrichtung nach einem der vorhergehenden Ansprüche, **dadurch gekennzeichnet, daß** die jeweilige Verfahreinrichtung (22, 24, 26) der Spannelemente (14, 16, 18) in Abhängigkeit der aktuellen Position der Bearbeitungseinheit bezüglich des Werkstücks (12) aktiviert wird.

10. Spanneinrichtung nach einem der vorhergehenden Ansprüche, **dadurch gekennzeichnet, daß** die NC-Steuerung die Verfahreinrichtung (22, 24, 26) beziehungsweise die Stellmittel (38) in Abhängigkeit eines Kollisionsfensters individuell aktiviert, welches bevorzugt in einem Speicher der NC-Steuerung abgelegt ist.

11. Spannvorrichtung nach einem der vorhergehenden Ansprüche, **dadurch gekennzeichnet, daß** die Verfahreinrichtung (22, 24, 26) beziehungsweise die Stellmittel (38) während des Verfahrens der Bearbeitungseinrichtung von einer ersten Bearbeitungsposition zu einer zweiten Bearbeitungsposition aktiviert werden.

12. Spanneinrichtung nach einem der vorhergehenden Ansprüche, **dadurch gekennzeichnet, daß** die Verfahreinrichtung (22, 24, 26) beziehungsweise die Stellmittel (38) während der einzelnen Bearbeitungsschritte der Bearbeitungseinrichtung deaktiviert sind.

## Claims

1. Clamping equipment (10) for workpieces (12), such as window or door profile members or other elongate profile members, comprising several clamping elements (14, 16, 18) for clamping the workpiece (12) in place at several mutually spaced positions along the length direction (20) of the workpiece (12), wherein each of the clamping elements (14, 16, 18) is movable along the length direction of the workpiece (12) independently of the other clamping elements (14, 16, 18) from a first clamping position (28) to at least one second clamping position (30), by means of a respectively associated travel device (22, 24, 26), activatable by means of an NC control, in combination with a movable processing unit, which is associated with the clamping equipment (10), for processing the workpieces (12) over a processing length, **characterised in that** the NC control is constructed in such a manner that it determines the travel path of the clamping elements (14, 16, 18) between the first clamping position (28) and the second clamping position (30) in dependence on the processing length of the respective processing step of the workpiece (12).

2. Clamping equipment according to claim 1, **characterised in that** the clamping elements (14, 16, 18) are arranged to be movable in a longitudinal row in succession on a tool table (32) or the like, particularly at a common guide (34).

3. Clamping equipment according to one of the preceding claims, **characterised in that** the first and/or second clamping position (28, 30) is or are arranged at a spacing along the length direction (20) of the workpiece (12) of approximately 0.3 metres to approximately 0.7 metres, preferably approximately 0.5 metres.

4. Clamping equipment according to one of the preceding claims, **characterised in that** the travel device (22, 24, 26) comprises pneumatically or electrically actuated setting means (38), such a pneumatic piston-cylinder device (36) or an electric stepping or linear motor, and a clamping element (14, 16, 18) is coupled with the setting means (38).

5. Clamping equipment according to claim 4, **characterised in that** the setting means (38) are individually activated by means of a NC-control.

6. Clamping equipment according to one of the preceding claims, **characterised in that** the several clamping elements (14, 16, 18) and/or several travel devices (22, 24, 26) are constructed as substantially identical components.

7. Clamping equipment according to one of the preceding claims, **characterised in that** the processing unit is movable on a tool table (32) by means of, for example, a support and is constructed as, in particular, a milling, drilling or sawing device, wherein the processing unit and the clamping elements (14, 16, 18) are movable independently of one another.

8. Clamping equipment according to one of the preceding claims, **characterised in that** the processing length of a processing step is, for example, the milling path or a saw cut of the workpiece (12) and the travel path of the clamping elements (14, 16, 18) adopts values approximately 1 to 3 times, preferably twice, the respective processing length.

9. Clamping equipment according to one of the preceding claims, **characterised in that** the respective travel device (22, 24, 26) of the clamping elements (14, 16, 18) is activated in dependence on the current position of the processing unit with respect to the workpiece (12).

10. Clamping equipment according to one of the preceding claims, **characterised in that** the NC-control individually activates the travel device (22, 24, 26) or the setting means (38) in dependence on a collision window which is preferably filed in a memory of the NC-control.

11. Clamping equipment according to one of the preceding claims, **characterised in that** the travel device (22, 24, 26) or the setting means (38) is activated during movement of the processing device from a first processing position to a second processing position.

12. Clamping equipment according to one of the preceding claims, **characterised in that** the travel device (22, 24, 26) or the setting means (38) is activated during individual processing steps of the processing device.

## Revendications

1. Dispositif de serrage (10) pour des pièces (12), telles que des profilés de fenêtre ou de porte ou autre profilé s'étendant en longueur, comportant plusieurs éléments de serrage (14, 16, 18) pour le maintien de la pièce (12) en plusieurs positions espacées les unes des autres le long de l'étendue longitudinale (20) de la pièce (12), chaque élément de serrage (14, 16, 18), pouvant être déplacé indépendamment des autres éléments de serrage (14, 16, 18) au moyen d'un dispositif de déplacement (22, 24, 26) associé et actionné au moyen d'une commande numérique, d'une première position de maintien (28) à une deuxième position de maintien (30) le long de l'étendue longitudinale de la pièce (12), combiné à une unité d'usinage déplaçable associée au dispositif de serrage (10) pour l'usinage de la pièce (12) sur une longueur d'usinage, **caractérisé en ce que** la commande numérique est conçue de façon à déterminer la course de déplacement des éléments de serrage (14, 16, 18) entre la première position de maintien (28) et la deuxième position de maintien (30) en fonction de la longueur d'usinage de chaque opération d'usinage de la pièces (12).

2. Dispositif de serrage selon la revendication 1, **caractérisé en ce que** les éléments de serrage (14, 16, 18) sont disposés de manière déplaçable les uns derrière les autres en une rangée longitudinale sur une table porte-outil (32) ou support similaire, en particulier sur un guide commun (34).

3. Dispositif de serrage selon une des revendications précédentes, **caractérisé en ce que** les première et/ou la deuxième positions de maintien (28, 30) sont disposées le long de l'étendue longitudinale (20) de la pièce (12) à un espacement d'environ 0,3 mètre à environ 0,7 mètre, de préférence d'environ 0,5 mètre.

4. Dispositif de serrage selon une des revendications précédentes, **caractérisé en ce que** le dispositif de déplacement (22, 24, 26) présente des moyens de commande (38) à actionnement pneumatique ou électrique, comme un dispositif pneumatique à cylindre et piston (36), et **en ce que** l'élément de serrage (14, 16, 18) est accouplé au moyen de commande (38).

5. Dispositif de serrage selon la revendication 4, **caractérisé en ce que** les moyens de commande (38) sont activés individuellement au moyen d'une commande numérique.

6. Dispositif de serrage selon une des revendications précédentes, **caractérisé en ce que** les éléments de serrage (14, 16, 18) et/ou les dispositifs de déplacement (22, 24, 26) sont conçus sensiblement comme des éléments identiques.

7. Dispositif de serrage selon une des revendications précédentes, **caractérisé en ce que** l'unité d'usinage est déplaçable sur une table porte-outil (32), par exemple au moyen d'un support, et est conçue en particulier sous la forme d'une dispositif de fraisage, d'alésage ou de sciage, l'unité d'usinage et les éléments de serrage (14, 16, 18) étant déplaçables indépendamment les uns des autres.

8. Dispositif de serrage selon une des revendications précédentes, **caractérisé en ce que** la longueur d'usinage d'une opération d'usinage est égale par exemple à la course de fraisage ou un trait de coupe de la pièce (12), et **en ce que** la course de déplacement des éléments de serrage (14, 16, 18) adopte des valeurs d'environ une à trois fois, de préférence deux fois, la longueur d'usinage.

9. Dispositif de serrage selon une des revendications précédentes, **caractérisé en ce que** chaque dispositif de déplacement (22, 24, 26) des éléments de serrage (14, 16, 18) est activé en fonction de la position instantanée de l'unité d'usinage par rapport à la pièce (12).

10. Dispositif de serrage selon une des revendications précédentes, **caractérisé en ce que** la commande numérique active le dispositif de déplacement (22, 24, 26) et/ou les moyens de commande (38) individuellement en fonction d'une fenêtre de collision, qui est de préférence enregistrée dans une mémoire de la commande numérique.

11. Dispositif de serrage selon une des revendications précédentes, **caractérisé en ce que** le dispositif de déplacement (22, 24, 26) et/ou les moyens de commande (38) peuvent être activés pendant le déplacement du dispositif d'usinage d'une première position d'usinage à une deuxième position d'usinage.

12. Dispositif de serrage selon une des revendications précédentes, **caractérisé en ce que** le dispositif de déplacement (22, 24, 26) et/ou les moyens de commande (38) sont désactivés pendant les opérations d'usinage individuelles du dispositif d'usinage.
